# EUROPÄISCHE PATENTSCHRIFT

(11) **EP 3 380 743 B1**
(45) Veröffentlichungstag und Bekanntmachung des Hinweises auf die Patenterteilung: **24.06.2020**
(21) Anmeldenummer: 16801438.9
(22) Anmeldetag: 23.11.2016
(51) Int. Cl.: F16F 9/34, F16F 9/516

(54) **SCHWINGUNGSDÄMPFER MIT HYDRAULISCHEM ZUGANSCHLAG**
VIBRATION DAMPER HAVING A HYDRAULIC TRACTION STOP
AMORTISSEUR DE VIBRATIONS À BUTÉE DE TRACTION HYDRAULIQUE

(30) Priorität: 27.11.2015 DE 102015223581
(43) Veröffentlichungstag der Anmeldung: 03.10.2018
(73) Patentinhaber: Volkswagen Aktiengesellschaft, 38440 Wolfsburg (DE)
(72) Erfinder: SCHLEGEL, Jan-Rickmer, 38179 Gross Schwülper (DE); KLÖKER, Georg, 38170 Kneitlingen (DE); SCHREINER, Marco, 38120 Braunschweig (DE)
(86) Internationale Anmeldenummer: PCT/EP2016/078597
(87) Internationale Veröffentlichungsnummer: WO 2017/089425

(56) Entgegenhaltungen:
- WO-A1-2005/106282
- DE-A1- 2 806 540
- DE-A1- 3 907 531
- DE-A1-102012 101 618
- GB-A- 644 945
- US-A- 3 150 747
- US-A- 5 697 477
- US-A1- 2015 090 548

## Beschreibung

Die Erfindung bezieht sich auf einen Schwingungsdämpfer mit den Merkmalen gemäß dem Oberbegriff von Anspruch 1.

Ein solcher Schwingungsdämpfer ist aus der WO 2005/106282 A1 bekannt.

Die hydraulische Dämpfungseinrichtung stellt hierbei ein Zusatzelement am Schwingungsdämpfer dar, durch das Energie dissipiert wird, um beim Erreichen des Zugendanschlags des Schwingungsdämpfers geringere Kräfte einen Fahrzeugaufbau einzuleiten.

Hydraulische Zuganschläge für in Kraftfahrzeugradaufhängungen eingesetzte Schwingungsdämpfer sind in einer Vielzahl von Bauarten bekannt. Zumeist bestehen diese aus einer Vielzahl von Bauteilen, wodurch der Fertigungs- und Montageaufwand verhältnismäßig hoch sind. Beispiele für Schwingungsdämpfer mit einem solchermaßen aufwändigen hydraulischen Zuganschlag sind aus EP2 910 811 A1, WO 2014/165951 A1 und US 2015/0090548 A1 bekannt. Um den Dichtungsring in der Nut zu montieren, muss der Dämpfungskolben zweiteilig ausgeführt werden. Der mit solchen Lösungen verbundene Fertigungs- und Montageaufwand wird mit Blick auf große Stückzahlen vorliegend als verbesserungsbedürftig angesehen.

Ein einfacher herstellbarer Dämpfungskolben ist aus DE 10 2011 089 140 B1 bekannt. Dieser dient allerdings lediglich als Widerlager für einen Dichtungsring aus Elastomermaterial in Zugrichtung. Deswegen ist der Dichtungsring zusätzlich in einer Ringnut der Kolbenstange aufgenommen. Allerdings eignet sich diese Ausführungsvariante wegen der Ringnut nur für Kolbenstangen aus Vollmaterial, die jedoch entsprechend schwer sind. Durch Verformung des Dichtungsrings aus Elastomermaterial werden in Abhängigkeit der Bewegungsrichtung Kanäle im Dichtungselement verschlossen oder geöffnet.

Ein Schwingungsdämpfer der eingangs genannten Art ist aus DE 39 07 531 A1 bekannt. Beim Einfahren in einen im Durchmesser verjüngten Abschnitt in der Zugstufe wird der Dichtungsring radial einwärts komprimiert, um im Dämpfungskolben ausgebildete Überströmkanäle zu schließen. Dies bedeutet in der Fertigung, dass in dem Dämpfungskolben entsprechende Durchgangsöffnungen eigens hergestellt werden müssen. Dies ist sehr aufwändig.

Davon ausgehend liegt der Erfindung die Aufgabe zugrunde, Fertigung und Montage eines hydraulischen Zuganschlags für einen in einer Kraftfahrzeugradaufhängung einsetzbaren Schwingungsdämpfer zu vereinfachen.

Diese Aufgabe wird durch einen Schwingungsdämpfer mit hydraulischem Zuganschlag gemäß den Merkmalen aus dem kennzeichnenden Teil von Patentanspruch 1 gelöst.

Hierdurch werden Fertigung und Montage der hydraulischen Dämpfungseinrichtung vereinfacht.

Vorteilhafte Ausgestaltungen sind Gegenstand weiterer Patentansprüche.

Insbesondere kann der Dämpfungskolben eine durch Drehen herstellbare Form aufweisen, d.h. zumindest überwiegend rotationssymmetrisch ausgeführt sein.

Ferner kann das Behälterrohr als Zylinderrohr, insbesondere als Zylinderrohr mit einem Kreisringquerschnitt ausgeführt sein.

Die definierte Durchlässigkeit in der Druckstufe kann vorzugsweise ohne das Anbringen von zusätzlichen Leckagenuten und Bohrungen am Dämpferkolben bewerkstelligt werden.

Der besagte Endbereich des Kolbenstangenauszugswegs wird vorzugsweise durch eine Verjüngung des freien Innendurchmessers im Behälterrohr definiert, beispielsweise durch einen eingezogenen Abschnitt am Behälterrohr oder durch eine eingesetzte Hülse bei konstantem Innendurchmesser des Behälterrohrs.

Weiterhin kann die umlaufende Nut eine druckrichtungsseitige Flanke aufweisen, welche die Nut auf der Seite in Druckrichtung begrenzt und in Zugrichtung weist, und gegen welche der Dichtungsring bei Bewegung der Kolbenstange in Zugrichtung gedrängt wird und abdichtet. Die der druckrichtungsseitigen Flanke gegenüberliegende Flanke der Nut wird nachfolgend als zugrichtungsseitige Flanke bezeichnet werden.

In einigen Ausführungsvarianten kann der Dichtungsring in besagtem Endbereich infolge der auf diesen durch das Behälterrohr einwirkenden Reibungskräfte in der umlaufenden Nut des Dämpfungskolbens des relativ zu dem Dämpfungskolben axial verlagerbar sein, um das Öffnen und Schließen zu beschleunigen.

Eine solche Verlagerbarkeit kann sich jedoch auch auf lokale Teilabschnitte des Umfangs des Dichtungsrings beschränken.

Ferner können Mittel vorgesehen sein, welche den Dichtungsring außerhalb des Endbereich des Kolbenstangenauszugswegs in Anlage gegen die druckrichtungsseitige Flanke halten, so dass der Dichtungsring bei Eintritt in die hydraulische Dämpfung eine definierte Position in der Nut einnimmt.

Beispielsweise kann der Dichtungsring durch eine Feder und/oder durch an dem Dichtungsring ausgeformte Federabschnitte gegen die druckrichtungsseitige Flanke gedrängt sein. Hierdurch kann in der Zugstufe der Dichtungsring insgesamt von der druckrichtungsseitigen Flanke abheben, um einen großen Querschnitt vorzugsweise unter dem Dichtungsring hindurch für das Dämpfungsmedium freizugeben.

Der Dichtungsring besteht vorzugsweise aus Federstahl. Durch Verwendung von Federstahl kann gewährleistet werden, dass der Dichtungsring nach seinem Aufdehnen zum Zweck der Montage in die Nut in seine ursprüngliche Form zurückkehrt. Eine Verwendung anderer Materialen ist ebenfalls möglich, sofern ein entsprechend aufgeweiteter Dichtungsring trotz eines Aufspreizens elastisch in seine gewollte Sollform zurückkehrt.

Erfindungsgemäß weist der Dämpfungskolben eine Kolbenschulter auf, welche die umlaufende Nut des Dämpfungskolbens in Form einer weiteren zugrichtungsseitigen Flanke begrenzt, die der druckrichtungsseitigen Flanke gegenüberliegt. Die Kolbenschulter ist dabei an einer oder mehreren Stellen in Richtung der Nut umgeformt, um axial in die umlaufende Nut hineinzuragen und den Dichtungsring lokal axial abzustützen und zwischen diesen Stellen axial freizustellen. In der Zugstufe werden die freigestellten Abschnitte kleinerer Höhe etwas elastisch verformt, um wiederum den gewünschten Querschnitt für das Dämpfungsmedium freizugeben.

Nachfolgend wird die Erfindung anhand eines in der Zeichnung dargestellten Ausführungsbeispiels sowie verschiedener Abwandlungsvarianten desselben näher erläutert. Die Zeichnung zeigt in:
- Figuren1 bis 5: nicht mehr von der Erfindung umfasste Ausführungsbeispiele
- Figur 6: eine erfindungsgemäße Variante der hydraulischen Dämpfungseinrichtung,
- Figur 7: eine Schnittansicht der erfindungsgemäßen Variante der hydraulischen Dämpfungseinrichtung gemäß Fig. 6,
- Figuren 8 bis 15: nicht mehr von der Erfindung umfasste Ausführungsbeispiele

Das Ausführungsbeispiel und die weiteren Ausführungsvarianten beziehen sich auf einen Schwingungsdämpfer 1 mit hydraulischem Zuganschlag, der in einer Radaufhängung eines Kraftfahrzeugs eingesetzt werden kann.

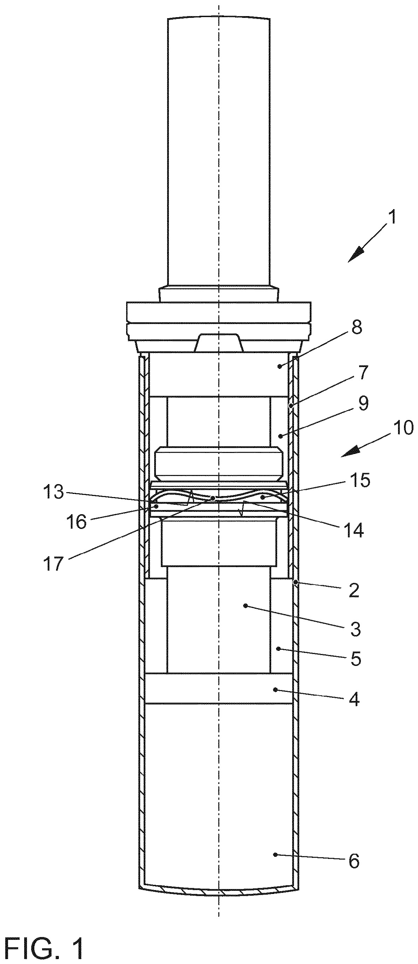

In Figur 1 ist beispielhaft ein Schwingungsdämpfer 1 mit einem Behälterrohr 2 dargestellt, in das eine Kolbenstange 3 eintaucht. An der Kolbenstange 3 ist ein Kolben 4 starr befestigt, welcher den Innenraum des Behälterrohrs 2 in zwei Kammern 5 und 6 unterteilt. Die beiden Kammern 5 und 6 bilden einen oberen und unteren Arbeitsraum des Schwingungsdämpfers zur Aufnahme eines hydraulischen Dämpfungsmediums.

Der Schwingungsdämpfer 1 weist ferner eine hydraulische Dämpfungseinrichtung 10 auf, welche sowohl bei Einrohrdämpfern als auch bei Zweirohrdämpfern verwendet werden kann und nachfolgend näher erläutert wird.

Die hydraulische Dämpfungseinrichtung 10 umfasst einen Dämpfungskolben 11, welcher dazu dient, in einem Endbereich eines Kolbenstangenauszugswegs vor Erreichen des maximalen Kolbenstangenauszugswegs eine der Zugbewegung der Kolbenstange 3 entgegen gerichtete hydraulische Kraft bereitzustellen. Der Dämpfungskolben 11 ist als einstückiges Bauteil ausgebildet und weist eine umlaufende Nut 12 auf.

Diese Nut 12 kann durch zwei einander gegenüberliegende Flanken 13 und 14 begrenzt sein, nämlich eine zugrichtungsseitige Flanke 13, welche in Druckrichtung weist, und eine druckrichtungsseitige Flanke 14, welche in Zugrichtung weist. Beide Flanken 13 und 14 sind durch einen vorzugsweise zylindrisch ausgebildeten Nutgrund 15 miteinander verbunden. Die Flanken 13 und 14 sind vorzugsweise in Umfangsrichtung ununterbrochen.

Weiterhin umfasst die hydraulische Dämpfungseinrichtung 10 einen Dichtungsring 16, der in der umlaufenden Nut 12 aufgenommen ist, um im besagten Endbereich des Kolbenstangenauszugswegs gegen eine Innenwand des Behälterrohrs 2 gleitend abzudichten. Im übrigen Betriebsbereich des Schwingungsdämpfers ist der Dichtungsring 16 hingegen von der Innenwand des Behälterrohrs 2 radial etwas beabstandet.

Der Dichtungsring 16 ist geschlitzt ausgebildet, so dass dieser über eine der Flanken 13 und 14 hinweg in die Nut 12 eingeführt werden kann.

Der Endbereich des Kolbenstangenauszugswegs wird durch eine Verjüngung des freien Innendurchmessers im Behälterrohr 2 definiert. Vorliegend ist hierzu beispielhaft eine Hülse 7 axial in einen Endabschnitt des Behälterrohrs 2 eingesetzt, welches hier mit einem konstanten Innendurchmesser ausgeführt ist. Durch die Hülse 7 ergibt sich ein Endbereich mit verringertem Innendurchmesser. Der Dichtungsring 16 gelangt hier mit der so verjüngten Innenwand, welche durch die Innenwand der Hülse 7 gebildet wird, in Gleiteingriff. Es ist jedoch auch möglich, eine entsprechende Innendurchmesserverjüngung durch eine entsprechende Einziehung unmittelbar im Behälterrohr 2 bereitzustellen.

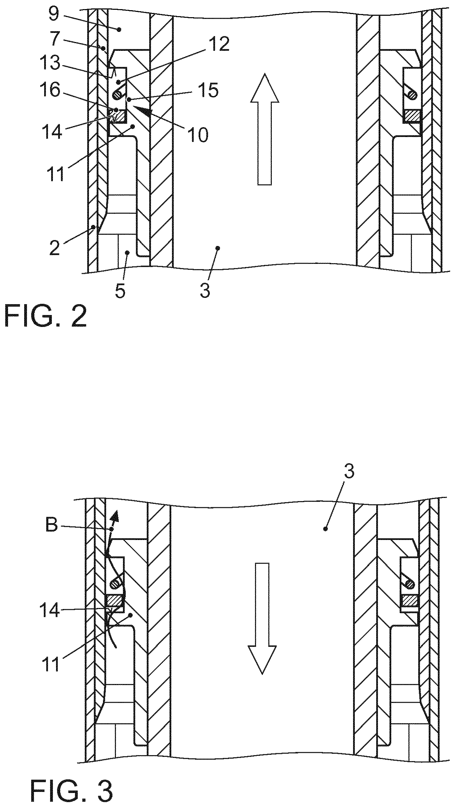

Die Funktion des hydraulischen Zuganschlags ist in den Figuren 2 und 3 dargestellt. Wird die Kolbenstange 3 in der Zugstufe des Schwingungsdämpfers soweit ausgezogen, dass der Dämpfungskolben 11 mit dem Dichtungsring 16 in den Bereich mit verjüngtem Innendurchmesser, d.h. den Endbereich des Kolbenstangenauszugswegs gelangt, so dichtet der Dichtungsring 16 in der Nut 12 bei weiterer Bewegung der Kolbenstange 3 in Zugrichtung einen Bereich zur Kolbenstangendichtung hin hydraulisch ab. Der Dichtungsring 16 liegt hierbei gegen die Innenwand des Behälterrohrs 2 bzw. der Hülse 7 an, um gegen diese abzudichten. Aufgrund der mit der Zugbewegung einhergehenden Gleitreibung sowie des sich aufbauenden Drucks in der zur Kolbenstangendichtung 8 hin gelegenen Teilkammer 9 wird der Dichtungsring 16 zudem gegen die druckrichtungsseitige Flanke 14 der Nut 12 gedrängt, um gegen diese Flanke 14 abzudichten (vgl. Fig. 2). Hierdurch wird ein hydraulischer Puffer bereitgestellt, der im Fall eines Zweirohrdämpfers optional, wie eingangs beschrieben, in einen beispielsweise das Behälterrohr 2 umgebenden Ausgleichstraum definiert entlastet werden kann.

Bei einer anschließenden Bewegung der Kolbenstange 3 in Druckrichtung wird hingegen, wie in Fig. 3 gezeigt, eine definierte Durchlässigkeit für ein hydraulisches Dämpfungsmedium bereitstellt. Der entsprechende Bypass für das Dämpfungsmedium ist mit dem Pfeil B gekennzeichnet. Wie man Fig. 3 entnehmen kann, hebt hierbei der Dichtungsring 16 von der druckseitigen Flanke 14 etwas ab, so dass das Dämpfungsmedium unter dem Dichtungsring 16 hindurchströmen kann. Insbesondere strömt das Dämpfungsmedium hierbei durch einen Ringspalt hindurch, welcher zwischen dem Innenumfang des Dichtungsrings 16 und dem Nutgrund 15 gebildet wird. Der radiale Außenumfang bleibt hierbei weiterhin mit dem Innenumfang des Behälterrohrs 2 bzw. der Hülse 7 in Kontakt. Eine radiale Freistellung erfolgt bei weiterer Bewegung in Zugrichtung nach Verlassen der Verjüngung des Behälterrohrinnendurchmessers.

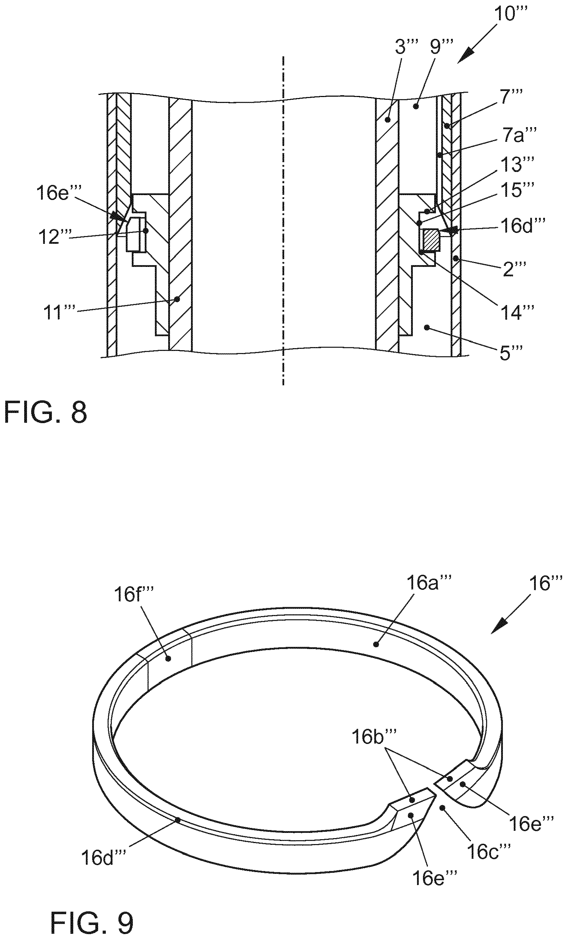

Die Hülse 7 kann, wie in Figur 8 beispielhaft gezeigt, an ihrem Innenumfang axial verlaufende Kanäle 7a ausbilden, beispielsweise in Form von Längsnuten, um zur schnellen Entlastung der Teilkammer 9 nach Erreichen des Totpunkts der Kolbenstangenbewegung im Endbereich des Kolbenstangenauszugswegs eine zusätzliche definierte Leckage bereitzustellen. Sofern die Verjüngung des Innendurchmessers unmittelbar durch die Innenwand des Behälterrohrs 2 bereitgestellt wird, können entsprechende Kanäle auch im Behälterrohr 2 ausgebildet werden. Allerdings ist dies aufwändiger, als bei einer in dieses eingesetzten Hülse 7.

Bei der Ausführungsvariante gemäß Fig. 1 ist die Breite der Nut 12 über deren gesamten Umfang etwas größer als die Höhe des Dichtungsrings 16. Zum Ausgleich dieses Axialspiel in der Nut 12 sind Mittel vorgesehen, welche den Dichtungsring 16 außerhalb des Endbereichs des Kolbenstangenauszugswegs in Anlage gegen die druckrichtungsseitige Flanke 14 halten. Durch diese Mittel kann sichergestellt werden, dass der Dichtungsring 16 bei Eintritt in den Endbereich des Kolbenstangenauszugswegs und damit bei Eintritt die hydraulische Endanschlagdämpfung eine definierte Position in der Nut 12 einnimmt.

Der Dichtungsring 16 kann beispielsweise durch eine Feder 17 gegen die druckrichtungsseitige Flanke 14 gedrängt werden. Die Feder 17 kann insbesondere ein Wellfederring sein, der in der umlaufenden Nut 12 aufgenommen ist. Die Feder 17 stützt sich vorliegend an der zugrichtungsseitigen Flanke 13 ab. Sie ermöglicht, dass der Dichtungsring 16 im Endbereich des Kolbenstangenauszugswegs in der Zugstufe infolge der auf den Dichtungsring 16 durch das Behälterrohr 2 bzw. die Hülse 7 einwirkenden Reibungskräfte in der umlaufenden Nut 12 des Dämpfungskolben 11 des relativ zu dem Dämpfungskolben 11 insgesamt axial verlagert wird, um ein Überströmen von Dämpfungsmedium durch den zwischen dem Dichtungsring 16 und den Nutgrund 15 gebildeten Spalt zu ermöglichen.

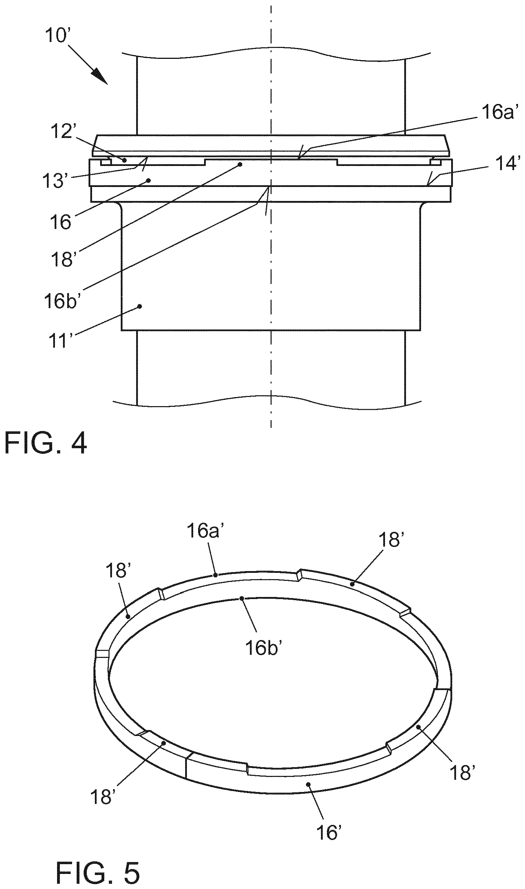

Ein solches gezieltes Überströmen durch Abheben von der druckrichtungsseitigen Flanke 14 bei gleichzeitiger axialer Lagefestlegung des Dichtungsrings 16 in der Nut 12 kann auch auf andere Art und Weise erzielt werden. Weitere Varianten werden nachfolgend anhand der Fig. 4 bis 15 erläutert, wobei hier, im Unterschied zu dem vorstehend erläuterten Ausführungsbeispiel gegebenenfalls auch nur ein lediglich lokales Abheben (vgl. 4 bis 7) des Dichtungsrings 16 von der druckrichtungsseitigen Flanke 14 vorgesehen ist. Auch hier bleibt jedoch der Aufbau der eine definierte Durchlässigkeit verwirklichenden Struktur einfach. Insbesondere müssen auch hier abgesehen von der umlaufenden Nut 12 keine zusätzlichen Bohrungen oder Nuten in den Dämpfungskolben 11 eingebracht werden.

Bei der in den Fig. 4 und 5 gezeigten Variante ist der Dichtungsring 16' in Axialrichtung mit einer in Umfangsrichtung variierenden Höhe ausgeführt. Die Höhe des Dichtungsrings 16' bestimmt sich hierbei durch Variation der in Zugrichtung weisenden Kante 16a' desselben, während die Weite der Nut 12' des Dämpfungskolbens 11' der größten Höhe des Dichtungsrings 16' entspricht oder allenfalls geringfügig größer ist.

Die Höhenvariation der Kante 16a' in Umfangsrichtung kann beispielsweise durch eine stetige Wellenform oder eine unstetige Kontur, beispielsweise in Stufenform, bewerkstelligt werden. Vorliegend sind lediglich beispielhaft stufenförmige Höcker 18' dargestellt, so dass sich in Umfangsrichtung abwechselnd Abschnitte mit größerer Höhe und kleinerer Höhe ergeben.

Die in Druckrichtung weisende Kante 16b' liegt hingegen über den gesamten Umfang glatt gegen die druckrichtungsseitige Flanke 14' der Nut 12' an. In der Zugstufe werden im Endbereich des Kolbenstangenauszugswegs die Abschnitte kleinerer Höhe etwas elastisch verformt, so dass die in Druckrichtung weisende Kante 16b' dort verstärkt von der druckrichtungsseitigen Flanke 14' abhebt, um den gewünschten Querschnitt für das Dämpfungsmedium freizugeben.

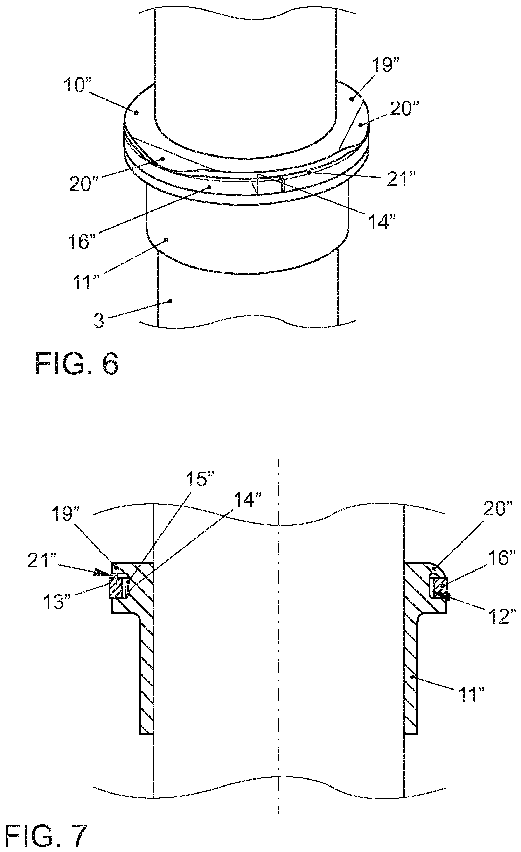

Bei der in den Fig. 6 und 7 gezeigten weiteren Variante kommt hingegen wiederum ein Dichtungsring 16" mit vorzugsweise konstanter Höhe in der Nut 12" zum Einsatz, wobei allerdings auch die Verwendung eines Dichtungsrings 16' mit variabler in Zugrichtung weisender Kante 16a' möglich ist.

Der Dämpfungskolben 11" weist eine Kolbenschulter 19" auf, welche die umlaufende Nut 12' des Dämpfungskolbens 11" in Form der zugrichtungsseitigen Flanke 13" begrenzt, die wie oben der druckrichtungsseitigen Flanke 14" gegenüberliegt.

Die Kolbenschulter 19" ist dabei an einer oder mehreren Stellen in Richtung der Nut 12" umgeformt, um axial in die umlaufende Nut 12" hineinzuragen und damit die Weite der Nut 12" lokal zu verringern.

Wie Fig. 6 und 7 zeigen, stützen entsprechende Nasen 20" den Dichtungsring 16" lokal axial ab, während dieser wischen diesen Stellen oder Nasen 20" axial freigestellt ist, d.h. zu der zugrichtungsseitigen Flanke 13" einen kleinen Spalt 21" aufweist. Die gegenüberliegende Kante 16b" stützt sich hingegen mit ihrem gesamten Umfang an der druckrichtungsseitigen Flanke 14" ab, um gegen diese abzudichten.

In der Zugstufe werden im Endbereich des Kolbenstangenauszugswegs werden die freigestellten Abschnitte des Dichtungsrings 16" etwas stärker elastisch verformt, um von der druckrichtungsseitigen Flanke 14" abzuheben und wiederum den gewünschten Querschnitt für das Dämpfungsmedium freizugeben.

Anhand der Figuren 8 bis 15 soll abschließend eine dritte Ausführungsvariante für den hydraulischen Zuganschlag 10"' vorgestellt werden. Die Ausgestaltung des Dämpfungskolbens 11'" kann dabei wie bei der ersten Variante gemäß den Figuren 1 bis 3 vorgenommen sein, so dass diesbezüglich auf die obigen Ausführungen verwiesen werden kann. Im Unterschied zu der ersten Variante entfällt bei dem in Figur 8 dargestellten Ausführungsbeispiel die Wellfeder 17. Vielmehr kann deren Funktionen gegebenenfalls durch einen nachfolgend näher in verschiedenen Varianten anhand der Figuren 9 bis 15 erläuterten Dichtungsring 16"' bzw. 116 übernommen werden.

Der Dämpfungskolben 11'" ist am Außenumfang einer Kolbenstange 3"' befestigt, die vorliegend hohl und damit besonders leicht ausgebildet werden kann. Der Dämpfungskolben 11'" kann beispielsweise auf die Kolbenstange 3'" aufgeschrumpft oder mit dieser verklebt oder verschweißt sein. Eine Außendurchmesserschwächung der Kolbenstange 3'" wird vorliegend allerdings vermieden. Der Dämpfungskolben 11'" ist vorliegend vorzugsweise als einstückiges Bauteil mit einer umlaufenden Nut 12'" ausgeführt.

Jedoch kann auch eine Teilung im Bereich der umlaufenden Nut 12'" vorgesehen sein. Die umlaufende Nut 12'" weist wiederum eine zugrichtungsseitige Flanke 13'" und eine druckrichtungsseitige Flanke 14'" auf, welche durch einen umlaufenden ununterbrochenen Nutgrund 15'" miteinander verbunden sind.

Der Dichtungsring 16'" ist in diese umlaufende Nut 12'" eingesetzt, wobei dieser zu dem Nutgrund 15'" ein definiertes radiales Spiel aufweist und ferner über den maximalen Außendurchmesser des Dämpfungskolbens 11'" radial aus der Nut 12'" hinausragt.

Der Dichtungsring 16'" erstreckt sich mit einem ebenen Hauptabschnitt 16a'" in einer Ebene parallel zur druckrichtungsseitigen Flanke 14"'. Er weist ferner in Umfangsrichtung zwei Endabschnitte 16b'" auf, welche durch einen Schlitz 16c'" voneinander getrennt sind. Durch elastisches Aufspreizen des Dichtungsrings 16"' im Bereich des Schlitzes 16c'" kann der Dichtungsring 16'" sehr einfach in die Nut 12'" montiert werden. Der Dichtungsring 16'" besteht hierzu aus einem entsprechend geeigneten Material, vorzugsweise Federstahl. Jedoch können auch Kunststoffe mit einem vergleichbaren Materialverhalten eingesetzt werden, solange diese nach dem elastischen Aufspreizen in die gewünschte Form zurückkehren.

Bei der in den Figuren 8 und 9 dargestellten Variante springen beide Endabschnitte 16b'" des Dichtungsrings 16'" unter einem schrägen Winkel in Richtung der zugrichtungsseitigen Flanke 13'" der Nut 12'" vor. Sie ragen somit über die Erstreckungsebene des Hauptabschnitts 16a'" des Dichtungsrings 16"' hinaus und bilden die der zugrichtungsseitigen Flanke 13'" nächstkommenden Abschnitte des Dichtungsrings 16"'. Geeignete Neigungswinkel zu dieser Erstreckungsebene liegen im Bereich von 10° bis 80° oder 110° bis 170° und weiter bevorzugt im Bereich von 15° bis 50° oder 130° bis 165°. Die Endabschnitte 16b'" lassen sich beispielsweise durch einfaches Aufbiegen der Enden des Dichtungsrings 16'" herstellen.

Der Dichtungsring 16"' kann so eingebaut sein, dass dieser durch die Endabschnitte 16b"' in Querrichtung der Nut 12"', das heißt in Richtung der Nutbreite, mit einer leichten Vorspannung festgelegt ist. Es ist jedoch auch möglich, in Richtung der Nutbreite für den Dichtungsring 16" mit den schräg angewinkelten Endabschnitten 16 B'" zwischen den Flanken 13" und 14'" der Nut 12'" eine Spielpassung vorzusehen.

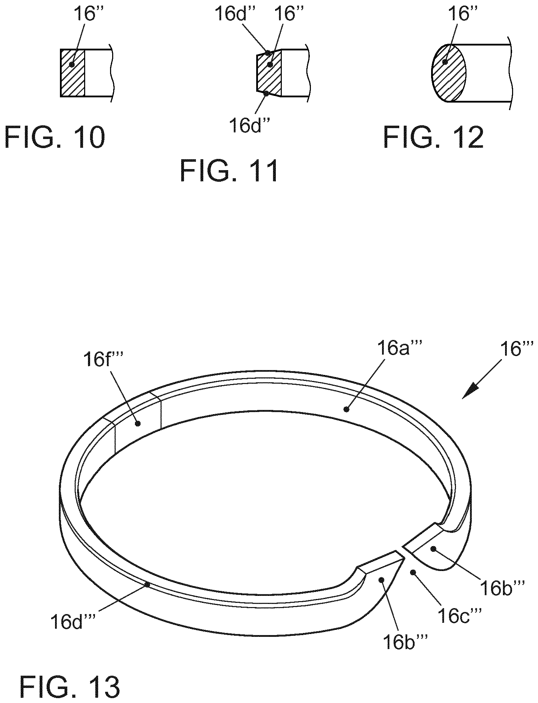

Vorzugsweise wird der Dichtungsring 16'" aus einem Drahtstück mit konstantem Querschnitt hergestellt. Beispiele für geeignete Querschnitte sind in den Figuren 10 bis 12 angedeutet. So können vor allem rechteckige und ovale Querschnittsformen zum Einsatz kommen, wie dies in den Figuren 10 und 12 dargestellt ist. Ferner kann der Querschnitt an der zur Innenwand des Behälterrohrs 2 weisenden Seite mit Phasen 16d"' versehen sein, wie dies in Figur 11 dargestellt ist, wodurch sich ein trapezförmiger Querschnitt für den Draht bzw. den Dichtungsring 16"' ergibt.

Weiterhin können entsprechende Phasen 16e"', wie anhand eines in Figur 13 dargestellten Beispiels gezeigt, an den Außenkanten der schräg angewinkelten Endabschnitte 16b'" des Dichtungsrings 16'" vorgesehen werden, um ein ungehinderten weichen Eintritt in die Hülse 7 zu ermöglichen. Alternativ oder ergänzend können hierzu die Endabschnitte 16b'" radial etwas einwärts gebogen werden, um diesen Effekt zu erzielen.

Weiterhin kann an dem Dichtungsring 16'" in Umfangsrichtung mindestens ein abgeflachter Abschnitt 16f" ausgebildet sein, welcher das Spiel zum Nutgrund 15"' der Nut 12"' verringert. Ein abgeflachter Abschnitt 16f" wird vorzugsweise gegenüber dem Spalt 16c'" angeordnet. Fig. 9 und 13 zeigen jeweils einen einzigen abgeflachten Abschnitt 16"', jedoch können auch mehrere solche Abschnitte vorgesehen werden. Diese abgeflachten Abschnitte 16f" weisen einen größeren Krümmungsradius auf als der übrige Dichtungsring 16"'.

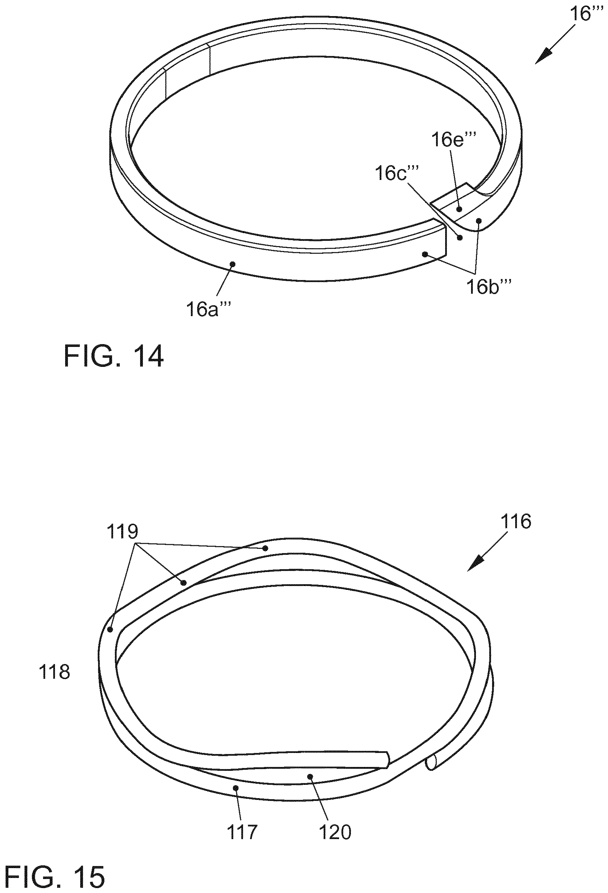

Gegebenenfalls kann es bereits ausreichend sein, lediglich einen Endabschnitt 16b'" des Dichtungsrings 16'" anzuwinkeln, wie dies in Figur 14 gezeigt ist. Der gegenüberliegende, nichtangewinkelte Endabschnitt setzt dann den gekrümmten Hauptabschnitt 16a'" ohne zusätzliche Richtungsveränderung fort.

Fig. 15 zeigt eine weitere Abwandlung des Dichtungsrings 116 zur Anordnung in der umlaufenden Nut 12 bzw. 12"'. Der Dichtungsring 116 ist als zweiwendeliger Ring aus Federdraht hergestellt. Anstelle einer Schlitzung in Axialrichtung wie bei den oben erläuterten Varianten ergibt sich hier gewissermaßen eine schraubenförmige Schlitzung 120 in Umfangsrichtung.

Der Federdraht kann einen Querschnitt wie in einer der Fig. 10 bis 12 gezeigt aufweisen. Auch ein kreisförmiger Querschnitt kann verwendet werden.

Der Dichtungsring 116 weist eine erste Wendel 117 zur Abdichtung gegen die druckrichtungsseitige Flanke 14 bzw. 14'" der Nut 12 bzw. 12'" und eine zweite Wendel 118 axial über der ersten Wendel 117 auf. Beide liegen in Querrichtung der Nut 12 bzw. 12'" nebeneinander. Die erste Wendel 117 erstreckt sich in einer Ebene parallel zur druckrichtungsseitigen Flanke 14 bzw. 14"'. Die zweite Wendel 118 liegt zwischen der ersten Wendel 117 und der zugrichtungsseitigen Flanke 13 bzw. 13"' der Nut 12 bzw. 12"'. Sie bildet in Richtung der zugrichtungsseitigen Flanke 13 bzw. 13"' eine Wellung 119 aus, d.h. in Umfangsrichtung aufeinanderfolgende Wellenberge und Wellentäler, die als Feder in Querrichtung der Nut 12 bzw. 12" wirken.

Unabhängig von der Ausbildung der hydraulischen Dämpfungseinrichtung 10, 10', 10" bzw. 10'" kann auf der Zugrichtungsseite an den Dämpfungskolben angrenzend ein elastischer Anschlagring an der Kolbenstange 3 befestigt sein, welcher zusammen mit dem Dämpfungskolben in den verjüngten Endbereich des Kolbenstangenauszugswegs verlagerbar ist. Der elastische Anschlagring kann dabei als Pufferkörper für den Endanschlag an die Kolbenstangenführung 8 dienen, sollte die rein hydraulische Dämpfung durch die hydraulische Dämpfungseinrichtung 10, 10', 10" bzw. 10'" nicht ausreichen. Gegebenenfalls kann der elastische Anschlagring 30 auch weggelassen werden.

Die Erfindung wurde vorstehend anhand eines Ausführungsbeispiels und weiterer Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf das beschriebene Ausführungsbeispiel und dessen Abwandlungen beschränkt, sondern umfasst alle durch die Patentansprüche definierten Ausgestaltungen.

### Bezugszeichenliste

- 1: Schwingungsdämpfer
- 2: Behälterrohr
- 3: Kolbenstange
- 4: Kolben
- 5: Kammer (oberer Arbeitsraum)
- 6: Kammer (unterer Arbeitsraum)
- 7: Hülse
- 7a: Kanal
- 8: Kolbenstangenführung
- 9: Teilkammer
- 10: hydraulische Dämpfungseinrichtung
- 11: Dämpfungskolben
- 12: Nut
- 13: zugrichtungsseitige Flanke der Nut
- 14: druckrichtungsseitige Flanke der Nut
- 15: Nutgrund
- 16: Dichtungsring
- 16a': zugrichtungsseitige Kante des Dichtungsrings
- 16a': druckrichtungsseitige Kante des Dichtungsrings
- 16a'": Hauptabschnitt des Dichtungsrings
- 16b'": Endabschnitt des Dichtungsrings
- 16c'": Spalt
- 16d'": Phase
- 16e'": Phase
- 16f": abgeflachter Abschnitt
- 17: Feder
- 18': Höcker
- 19": Kolbenschulter
- 20": Nase
- 21": Spalt
- 116: Dichtungsring
- 117: erste Wendel
- 118: zweite Wendel
- 119: Wellung
- 120: schraubenförmige Schlitzung
- B: Bypass

Mit Hochkommata bezeichnete Bezugszeichen entsprechen, soweit nicht anders angegeben, Elementen mit gleichen Nummern ohne Hochkommata

## Patentansprüche

1. Schwingungsdämpfer mit hydraulischem Zuganschlag für eine Kraftfahrzeugradaufhängung, umfassend:
ein Behälterrohr (2),
eine Kolbenstange (3), und
eine hydraulische Dämpfungseinrichtung (10) mit einem an der Kolbenstange (3) befestigten Dämpfungskolben (11), welche in einem Endbereich eines Kolbenstangenauszugswegs vor Erreichen des maximalen Kolbenstangenauszugswegs eine der Zugbewegung der Kolbenstange (3) entgegen gerichtete hydraulische Kraft bereitstellt,
wobei der Dämpfungskolben (11) eine umlaufende Nut (12) aufweist, in der ein geschlitzter Dichtungsring (16) aufgenommen ist,
wobei der Dichtungsring (16) in besagtem Endbereich des Kolbenstangenauszugswegs bei Bewegung der Kolbenstange (3) in Zugrichtung in der Nut (12) hydraulisch abdichtet und bei Bewegung der Kolbenstange (3) in Druckrichtung von einer druckrichtungsseitigen Flanke (14) der Nut (12), welche die Nut (12) auf der Seite in Druckrichtung begrenzt und in Zugrichtung weist, zumindest lokal abhebt, um eine definierte Durchlässigkeit für ein hydraulisches Dämpfungsmedium zwischen der Nut (12) und dem Dichtungsring (16) hindurch bereitzustellen, wobei der Dämpfungskolben (11") eine Kolbenschulter (19") aufweist, welche die umlaufende Nut (12") des Dämpfungskolbens (11") in Form einer weiteren zugrichtungsseitigen Flanke (13"), welche der druckrichtungsseitigen Flanke (14") gegenüberliegt, begrenzt, **dadurch gekennzeichnet, dass** die Kolbenschulter (19") an einer oder mehreren Stellen in Richtung der Nut (12") umgeformt ist, um axial in die umlaufende Nut (12") hineinzuragen und den Dichtungsring (16") lokal axial abzustützen und zwischen diesen Stellen axial freizustellen.

2. Schwingungsdämpfer mit hydraulischem Zuganschlag nach Anspruch 1, **dadurch gekennzeichnet, dass** der Dichtungsring (16) im Endbereich des Kolbenstangenauszugswegs bei Bewegung der Kolbenstange (3) in Zugrichtung der druckrichtungsseitigen Flanke (14) gedrängt wird und abdichtet.

3. Schwingungsdämpfer mit hydraulischem Zuganschlag nach Anspruch 2, **dadurch gekennzeichnet, dass** Mittel vorgesehen sind, welche den Dichtungsring (16) außerhalb des Endbereich des Kolbenstangenauszugswegs in Anlage gegen die druckrichtungsseitige Flanke (14) halten.

4. Schwingungsdämpfer mit hydraulischem Zuganschlag nach einem der voranstehenden Ansprüche, **dadurch gekennzeichnet, dass** der Dämpfungskolben (11) als einstückiges Bauteil mit einer umlaufenden Nut (12) zur Aufnahme des Dichtrings (16) ausbildet und/oder die Kolbenstange (3) als Hohlrohr ausgebildet ist.

## Claims

1. Vibration damper with hydraulic traction stop for a motor vehicle wheel suspension, comprising:
a container tube (2),
a piston rod (3), and
a hydraulic damping device (10) with a damping piston (11) that is attached to the piston rod (3) and that, in an end region of a piston rod extension path, prior to reaching the maximum piston rod extension, provides a hydraulic force directed against the pulling movement of the piston rod (3),
wherein the damping piston (11) has a circumferential groove (12) in which a slotted sealing ring (16) is received,
wherein the sealing ring (16) in said end region of the piston rod extension path hydraulically seals in the groove (12) when the piston rod (3) moves in the pulling direction and, when the piston rod (3) moves in the pressure direction, lifts off at least locally from a flank (14), on the side of the pressure direction, of the groove (12), which flank (14) delimits the groove (12) on the side in the pressure direction and points in the pulling direction, in order to provide a defined permeability for a hydraulic damping medium between the groove (12) and the sealing ring (16), wherein the damping piston (11") has a piston collar (19") that limits the circumferential groove (12") of the damping piston (11") in the form of an additional flank (13"), on the side of the pulling direction, which additional flank (13") is opposite the flank (14") on the side of the pressure direction,
**characterized in that**
the piston collar (19") is reshaped at one or more points in the direction of the groove (12") in order to project axially into the circumferential groove (12") and to support the sealing ring (16") locally in an axial manner and release it in an axial manner between such points.

2. Vibration damper with a hydraulic traction stop according to claim 1, **characterized in that the** sealing ring (16) in the end region of the piston rod extension path is pushed and seals when the piston rod (3) moves in the pulling direction of the flank (14) on the side of the pressure direction.

3. Vibration damper with a hydraulic traction stop according to claim 2, **characterized in that** means are provided that keep the sealing ring (16) outside the end region of the piston rod extension path in contact with the flank (14) on the side of the pressure direction.

4. Vibration damper with a hydraulic traction stop according to one of the preceding claims, **characterized in that** the damping piston (11) is formed as a one-piece component with a circumferential groove (12) for receiving the sealing ring (16) and/or the piston rod (3) is formed as a hollow tube.

## Revendications

1. Amortisseur de vibrations comprenant une butée de traction hydraulique pour une suspension de roue de véhicule automobile, comprenant :
un tube de réservoir (2),
une tige de piston (3) et
un dispositif d'amortissement hydraulique (10) comprenant un piston d'amortissement (11) fixé à la tige de piston (3), lequel, dans une zone terminale d'une course de sortie de la tige de piston, fournit une force hydraulique orientée en sens inverse au déplacement de traction de la tige de piston (3) avant l'atteinte de la course maximale de sortie de la tige de piston,
le piston d'amortissement (11) présentant une rainure périphérique (12), dans laquelle est logée une bague d'étanchéité (16) fendue,
la bague d'étanchéité (16), dans ladite zone terminale de la course de sortie de la tige de piston, réalisant l'étanchéité hydraulique dans la rainure (12) lors du déplacement de la tige de piston (3) dans le sens de traction et, lors du déplacement de la tige de piston (3) dans le sens de compression, se soulevant au moins localement d'un flanc côté sens de compression (14) de la rainure (12), lequel flanc limite la rainure (12) sur le côté dans le sens de compression et pointe dans le sens de traction, afin de fournir une perméabilité définie pour un agent d'amortissement hydraulique entre la rainure (12) et la bague d'étanchéité (16), le piston d'amortissement (11") présentant un épaulement de piston (19"), lequel limite la rainure périphérique (12") du piston d'amortissement (11") sous la forme d'un flanc supplémentaire côté sens de traction (13"), lequel est opposé au flanc côté sens de compression (14"),
**caractérisé en ce que**
l'épaulement de piston (19") est déformé en un ou plusieurs points dans le sens de la rainure (12"), afin de faire saillie axialement dans la rainure périphérique (12") et de supporter localement et axialement la bague d'étanchéité (16") et de la libérer axialement entre ces points.

2. Amortisseur de vibrations comprenant une butée de traction hydraulique selon la revendication 1, **caractérisé en ce que** la bague d'étanchéité (16), dans la zone terminale de la course de sortie de la tige de piston, lors du déplacement de la tige de piston (3) dans le sens de traction, est contre le flanc côté sens de compression (14) et forme une étanchéité.

3. Amortisseur de vibrations comprenant une butée de traction hydraulique selon la revendication 2, **caractérisé en ce que** des moyens sont prévus, lesquels maintiennent la bague d'étanchéité (16), en dehors de la zone terminale de la course de sortie de la tige de piston, en appui contre le flanc côté sens de compression (14).

4. Amortisseur de vibrations comprenant une butée de traction hydraulique selon l'une quelconque des revendications précédentes, **caractérisé en ce que** le piston d'amortissement (11) est réalisé comme un composant en une seule pièce comprenant une rainure périphérique (12) pour le logement de la bague d'étanchéité (16) et/ou la tige de piston (3) est réalisée comme un tube creux.
